# EUROPEAN PATENT APPLICATION

(11) **EP 4 325 935 A1**
(43) Date of publication of application: **21.02.2024**
(21) Application number: 22787447.6
(22) Date of filing: 08.04.2022
(51) Int. Cl.: H04W 36/00

(54) **MEASUREMENT METHOD AND DEVICE**

(30) Priority: 12.04.2021 CN 202110391030
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN)
(74) Representative: Lavoix
(86) International application number: PCT/CN2022/085785
(87) International publication number: WO 2022/218221

(57) **Abstract**

Embodiments of this application disclose a measurement method and apparatus, and a terminal and pertain to the field of communication technologies. The measurement method in the embodiments of this application includes: executing, by a remote terminal, a first operation, where the first operation includes executing measurement and evaluation related to relay selection or re-selection and executing or skipping executing a first sub-operation; where the first sub-operation includes measurement and evaluation related to cell selection or re-selection.

## Description

### CROSS-REFERENCE TO RELATED APPLICATIONS

This application claims priority to Chinese Patent Application No. 202110391030X, filed on April 12, 2021 and entitled "MEASUREMENT METHOD AND APPARATUS, AND TERMINAL", which is incorporated herein by reference in its entirety.

### TECHNICAL FIELD

This application pertains to the field of communication technologies, and specifically relates to a measurement method and apparatus, and a terminal.

### BACKGROUND

In relay (Relay) technology of wireless communication systems, one or more relay nodes are generally added between a network-side device and a terminal to forward a radio signal one or more times. That is, the radio signal needs to pass through multiple hops before reaching the terminal. Radio relay technology can be used to expand cell coverage and make up for blind spots in cell coverage, and also improve cell capacity through spatial resource multiplexing. For indoor coverage, the relay technology can also overcome penetration loss to improve indoor coverage quality.

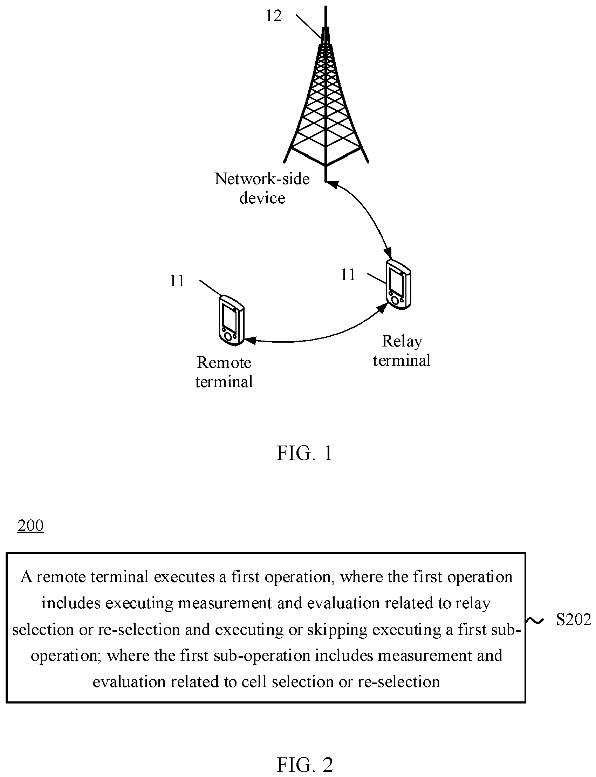

New radio (New Radio, NR) is studying how to support a terminal-to-network-side-device relay mechanism (UE-to-Network Relay mechanism). A typical scenario is shown in FIG. 1: A remote terminal (Remote UE) needs to transmit data to a network-side device, and because of poor coverage, finds a relay terminal (Relay UE) for forwarding. A Uu interface is present between the relay terminal and the network-side device, and a sidelink (sidelink) interface, or referred to as a PC 5 interface, is present between the relay terminal and the remote terminal.

In a sidelink relay scenario, the measurement behavior of remote terminals has not been specified in the related art yet, and therefore, communication requirements cannot be met.

### SUMMARY

Embodiments of this application provide a measurement method and apparatus, and a terminal to solve the problem that communication requirements cannot be met because of unspecified measurement behavior of remote terminals.

According to a first aspect, a measurement method is provided and includes: executing, by a remote terminal, a first operation, where the first operation includes executing measurement and evaluation related to relay selection or re-selection and executing or skipping executing a first sub-operation; where the first sub-operation includes measurement and evaluation related to cell selection or re-selection.

According to a second aspect, a measurement apparatus is provided and includes a measurement processing module configured to execute a first operation, where the first operation includes executing measurement and evaluation related to relay selection or re-selection and executing or skipping executing a first sub-operation; where the first sub-operation includes measurement and evaluation related to cell selection or re-selection.

According to a third aspect, a terminal is provided. The terminal includes a processor, a memory, and a program or instructions stored in the memory and capable of running on the processor, where when the program or instructions are executed by the processor, the method according to the first aspect is implemented.

According to a fourth aspect, a terminal is provided and includes a processor and a communication interface. The processor is configured to execute a first operation, where the first operation includes executing measurement and evaluation related to relay selection or re-selection and executing or skipping executing a first sub-operation; where the first sub-operation includes measurement and evaluation related to cell selection or re-selection.

According to a fifth aspect, a readable storage medium is provided. The readable storage medium stores a program or instructions, and when the program or instructions are executed by a processor, the method according to the first aspect is implemented.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program/program product is provided. The computer program/program product is stored in a non-transient storage medium, and the program/program product is executed by at least one processor to implement the method according to the first aspect.

In the embodiments of this application, the remote terminal can skip executing measurement and evaluation related to cell selection or re-selection but execute measurement and evaluation related to relay selection or re-selection; or execute measurement and evaluation related to cell selection or re-selection and execute measurement and evaluation related to relay selection or re-selection. This specifies the measurement behavior of the remote terminal, thereby making it easy to meet the communication requirement and improving the communication efficiency.

### BRIEF DESCRIPTION OF DRAWINGS

FIG. 1 is a schematic diagram of a wireless communication system according to an embodiment of this application;
FIG. 2 is a schematic flowchart of a measurement method according to an embodiment of this application;
FIG. 3 is a schematic structural diagram of a measurement apparatus according to an embodiment of this application;
FIG. 4 is a schematic structural diagram of a communication device according to an embodiment of this application; and
FIG. 5 is a schematic structural diagram of a terminal according to an embodiment of this application.

### DESCRIPTION OF EMBODIMENTS

The following clearly describes the technical solutions in embodiments of this application with reference to the accompanying drawings in the embodiments of this application. Apparently, the described embodiments are some but not all embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish between objects of a same type and do not limit the quantity of objects. For example, there may be one or a plurality of first objects. In addition, in this specification and claims, "and/or" indicates at least one of connected objects, and the character "/" generally indicates an "or" relationship between associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. These technologies may also be applied to other applications than an NR system application, for example, the 6^{th} generation (6^{th} Generation, 6G) communication system.

FIG. 1 is a schematic diagram of a wireless communication system to which embodiments of this application are applicable. The wireless communication system includes a terminal 11 and a network-side device 12, and the terminal 11 may include a relay terminal and a remote terminal. The terminal 11 may also be referred to as a terminal device or user equipment (User Equipment, UE). The terminal 11 may be a terminal-side device, such as a mobile phone, a tablet computer (Tablet Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a smart watch, a wrist band, earphones, glasses, and the like. It should be noted that the terminal 11 is not limited to a specific type in the embodiments of this application. The network-side device 12 may include an access network device or a core network device. The access network device 12 may also be referred to as a radio access network device, a radio access network (Radio Access Network, RAN), a radio access network function, or a radio access network unit. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a next generation NodeB (gNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the base station is not limited to a specific type. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that only a core network device in an NR system is used as an example in the embodiments of this application and the core network device is not limited to a specific type.

The following describes in detail the measurement method and device provided in the embodiments of this application through some embodiments and application scenarios thereof with reference to the accompanying drawings.

As shown in FIG. 2, an embodiment of this application provides a measurement method 200. The method may be executed by a remote terminal (Remote UE). In other words, the method may be executed by software or hardware installed on the remote terminal. The method includes the following step.

S202. The remote terminal executes a first operation, where the first operation includes executing measurement and evaluation related to relay selection or re-selection and executing or skipping executing a first sub-operation; where the first sub-operation includes measurement and evaluation related to cell selection or re-selection.

In this embodiment, the remote terminal can execute one of the following: skipping executing measurement and evaluation related to cell selection or re-selection but executing measurement and evaluation related to relay selection or re-selection; or executing measurement and evaluation related to cell selection or re-selection and executing measurement and evaluation related to relay selection or re-selection.

In this embodiment, the remote terminal executing measurement and evaluation related to cell selection or re-selection includes, for example, the remote terminal receiving a reference signal from a network-side device and measuring quality indicators such as reference signal received power (Reference Signal Received Power, RSRP) and reference signal received quality (Reference Signal Received Quality, RSRQ) of the reference signal, and then comparing the quality indicators with preset indicators to determine whether a cell selection or re-selection condition is met.

Optionally, in a case of determining that the cell selection or re-selection condition is met, the remote terminal can further initiate a radio resource control (Radio Resource Control, RRC) establishment procedure, RRC connection resume procedure, RRC connection re-establishment procedure, or the like with a cell that meets the cell selection or re-selection condition. This makes it easy to meet the communication requirement and improves communication efficiency.

In this embodiment, the remote terminal executing measurement and evaluation related to relay selection or re-selection includes, for example, the remote terminal receiving a reference signal from a relay terminal (Relay UE) and measuring quality indicators such as RSRP and RSRQ of the reference signal, and then comparing the quality indicators with preset indicators to determine whether a relay selection or re-selection condition is met.

Optionally, in a case of determining that the relay selection or re-selection condition is met, the remote terminal can further initiate an RRC connection establishment procedure, RRC connection resume procedure, RRC connection re-establishment procedure, or the like with a relay terminal that meets the relay selection or re-selection condition. This makes it easy to meet the communication requirement and improves communication efficiency.

According to the measurement method provided in this embodiment of this application, the remote terminal can skip executing measurement and evaluation related to cell selection or re-selection but execute measurement and evaluation related to relay selection or re-selection; or execute measurement and evaluation related to cell selection or re-selection and execute measurement and evaluation related to relay selection or re-selection. This specifies the measurement behavior of the remote terminal, thereby making it easy to meet the communication requirement and improving the communication efficiency.

Optionally, the first operation is executed in a first RRC procedure. To be specific, the remote terminal executes the first operation in the first RRC procedure. In this case, the embodiment 200 may further include the following step: Determine a state of the first RRC procedure based on an execution result obtained from the first operation, such as determining whether failure of the first RRC procedure occurs.

The first RRC procedure may include one of the following procedures: RRC connection establishment procedure; RRC connection resume procedure; and RRC connection re-establishment procedure.

In this embodiment, whether failure of the first RRC procedure occurs can be determined based on the first operation executed, and a resume operation corresponding to the failure of the first RRC procedure can be executed in a later time, facilitating the successful completion of the RRC procedure of the remote terminal in a sidelink relay scenario and improving the communication efficiency.

It should be noted that the measurement method provided in the embodiments of this application can be applied to not only sidelink relay scenarios in NR but also sidelink relay scenarios and sidelink relay scenarios of subsequent evolved systems.

The determining a state of the first RRC procedure based on an execution result obtained from the first operation may include one of the following (1) and (2): (1) in a case that the first operation includes executing the measurement and evaluation related to relay selection or re-selection and skipping executing the first sub-operation and that a relay selection or re-selection condition has been met, determining that failure of the first RRC procedure occurs; and (2) in a case that the first operation includes executing the measurement and evaluation related to relay selection or re-selection and executing the first sub-operation and that at least one of the following has been met: cell selection or re-selection condition and relay selection or re-selection condition, determining that failure of the first RRC procedure occurs.

In this embodiment, for example, in a case that the first operation executed by the remote terminal is skipping executing measurement and evaluation related to cell selection or re-selection but executing measurement and evaluation related to relay selection or re-selection: in a case that the relay selection or re-selection condition is met, it is determined that failure of the first RRC procedure occurs; and in a case that the relay selection or re-selection condition is not met, it is determined that the first RRC procedure does not fail.

In this embodiment, for another example, in a case that the first operation executed by the remote terminal is executing measurement and evaluation related to cell selection or re-selection but executing measurement and evaluation related to relay selection or re-selection, it is determined that failure of the first RRC procedure occurs: in a case that at least one of the following is met: the cell selection or re-selection condition and the relay selection or re-selection condition, it is determined that failure of the first RRC procedure occurs; and in a case that neither the cell selection or re-selection condition nor the relay selection or re-selection condition is met, it is determined that the first RRC procedure does not fail.

In the foregoing embodiments, in a case that the remote terminal determines that failure of the first RRC procedure occurs, the method may further include the following step: indicating, by an RRC layer of the remote terminal, first information to a non-access stratum (Non-Access Stratum, NAS) layer, where content of the first information includes at least one of the following: (1) failure of the first RRC procedure; and (2) reason for the failure of the first RRC procedure. In this example, the reason for the failure of the first RRC procedure may be the cell selection or re-selection condition being met and/or the relay selection or re-selection condition being met, and the specific reason can be obtained from the first operation executed.

In a case that the NAS layer learns about the failure of the first RRC procedure and/or the reason for the failure of the first RRC procedure, the foregoing embodiment may further include the following step: indicating, by the NAS layer of the remote terminal, the RRC layer to trigger a resume operation corresponding to the failure of the first RRC procedure, where the resume operation includes one of the following (1) to (3):
(1) initiating a second RRC procedure with a cell that meets the cell selection or re-selection condition;
(2) initiating a second RRC procedure with a relay terminal that meets the relay selection or re-selection condition; and
(3) determining, based on first measurement information, to initiate a second RRC procedure with a cell that meets the cell selection or re-selection condition or initiate a second RRC procedure with a relay terminal that meets the relay selection or re-selection condition, where the first measurement information includes at least one of the following: first measurement result of Uu link and second measurement result of sidelink.

In this embodiment, the first measurement result may be Uu link quality measured by the remote terminal. The first measurement result may be a measurement result obtained by the remote terminal based on the first operation (that is, measurement and evaluation related to cell selection or re-selection) executed or may be a measurement result obtained by the remote terminal based on a Uu measurement configuration preconfigured by the network-side device.

The second measurement result may be a sidelink (sidelink) link quality measured by the remote terminal. Similarly, the second measurement result may be a measurement result obtained by the remote terminal based on the first operation (that is, measurement and evaluation related to relay selection or re-selection) executed, a measurement result obtained by the remote terminal based on a sidelink measurement configuration preconfigured by the network-side device, or a measurement result obtained by the remote terminal based on a unicast link for communication with a relay terminal.

In this embodiment, whether failure of the first RRC procedure occurs is determined based on the first operation executed, and the remote terminal is triggered to initiate the second RRC procedure corresponding to the failure of the first RRC procedure, thereby ensuring the successful completion of the RRC procedure of the remote terminal in a sidelink relay scenario and improving the communication efficiency.

Specifically, in this embodiment, the remote terminal can determine, based on whether the relay selection or re-selection condition (and optionally, the cell selection or re-selection condition) is met, whether RRC connection establishment/re-establishment/resume fails and can further execute an RRC connection resume procedure after the RRC failure, thereby ensuring the successful completion of the RRC procedure of the remote terminal in a sidelink relay scenario and improving the communication efficiency.

As mentioned above, the first RRC procedure may include one of the following procedures: RRC connection establishment procedure; RRC connection resume procedure; and RRC connection re-establishment procedure. Correspondingly, the second RRC procedure may include one of the following procedures: RRC connection establishment procedure; RRC connection resume procedure; and RRC connection re-establishment procedure.

In an example, in a case that the remote terminal remains in a RRC state before initiating the second RRC procedure, that is, the remote terminal has not undergone RRC state transition, the second RRC procedure is the same as the first RRC procedure.

For example, in a case that the remote terminal remains in an inactive (inactive) state all the time before initiating the second RRC procedure, both the first RRC procedure and the second RRC procedure are RRC connection resume procedures. In a case that the remote terminal remains in an idle (idle) state all the time before initiating the second RRC procedure, both the first RRC procedure and the second RRC procedure are RRC connection establishment procedures. In a case that the remote terminal remains in a connected state all the time before initiating the second RRC procedure, both the first RRC procedure and the second RRC procedure are RRC connection re-establishment procedures.

In another example, the remote terminal enters an idle state before initiating the second RRC procedure, where the second RRC procedure is an RRC connection establishment procedure. The first RRC procedure may include one of the following procedures: RRC connection establishment procedure; RRC connection resume procedure; and RRC connection re-establishment procedure.

For example, in a case that the remote terminal initiates the first RRC procedure in an idle state and that the remote terminal remains in the idle state all the time before initiating the second RRC procedure, the remote terminal initiates the second RRC procedure in the idle state, where the second RRC procedure is an RRC connection establishment procedure. In a case that the remote terminal initiates the first RRC procedure in an inactive state and that the remote terminal enters an idle state before initiating the second RRC procedure, the remote terminal initiates the second RRC procedure in the idle state, where the second RRC procedure is an RRC connection establishment procedure. In a case that the remote terminal initiates the first RRC procedure in a connected state and that the remote terminal enters an idle state before initiating the second RRC procedure, the remote terminal initiates the second RRC procedure in the idle state, where the second RRC procedure is an RRC connection establishment procedure.

Optionally, the determining, based on the first measurement information, to initiate the second RRC procedure with the cell that meets the cell selection or re-selection condition or initiate the second RRC procedure with the relay terminal that meets the relay selection or re-selection condition in the foregoing embodiment includes at least one of the following (1) and (2):
(1) in a case that the first measurement result is greater than the second measurement result, initiating the second RRC procedure with the cell that meets the cell selection or re-selection condition; and
(2) in a case that the first measurement result is less than the second measurement result, initiating the second RRC procedure with the relay terminal that meets the relay selection or re-selection condition.

It can be understood that in a case that the first measurement result is equal to the second measurement result, the remote terminal can initiate the second RRC procedure with the cell that meets the cell selection or re-selection condition, or initiate the second RRC procedure with the relay terminal that meets the relay selection or re-selection condition, depending on a configuration by the network-side device, indication by the network-side device, or a predefined rule (for example, protocol agreement).

Optionally, the determining, based on first measurement information, to initiate a second RRC procedure with a cell that meets the cell selection or re-selection condition or initiate a second RRC procedure with a relay terminal that meets the relay selection or re-selection condition in the previous embodiment includes: determining, based on the first measurement information and second information, to initiate the second RRC procedure with the cell that meets the cell selection or re-selection condition or initiate the second RRC procedure with the relay terminal that meets the relay selection or re-selection condition; where the second information includes at least one of the following: first threshold related to Uu link and second threshold related to sidelink.

In an example, the second information includes the first threshold. For example, the network-side device has configured the first threshold but has not configured the second threshold. The determining, based on the first measurement information and second information, to initiate the second RRC procedure with the cell that meets the cell selection or re-selection condition or initiate the second RRC procedure with the relay terminal that meets the relay selection or re-selection condition includes at least one of (1) and (2):
(1) in a case that the first measurement result is greater than the first threshold, initiating the second RRC procedure with the cell that meets the cell selection or re-selection condition; and
(2) in a case that the first measurement result is less than the first threshold, initiating the second RRC procedure with the relay terminal that meets the relay selection or re-selection condition.

It can be understood that in a case that the first measurement result is equal to the first threshold, the remote terminal can initiate the second RRC procedure with the cell that meets the cell selection or re-selection condition, or initiate the second RRC procedure with the relay terminal that meets the relay selection or re-selection condition, depending on a configuration by the network-side device, indication by the network-side device, or a predefined rule (for example, protocol agreement).

In another example, the second information includes the second threshold. For example, the network-side device has configured the second threshold but has not configured the first threshold. The determining, based on the first measurement information and second information, to initiate the second RRC procedure with the cell that meets the cell selection or re-selection condition or initiate the second RRC procedure with the relay terminal that meets the relay selection or re-selection condition includes at least one of (1) and (2):
(1) in a case that the second measurement result is greater than the second threshold, initiating the second RRC procedure with the relay terminal that meets the relay selection or re-selection condition; and
(2) in a case that the second measurement result is less than the second threshold, initiating the second RRC procedure with the cell that meets the cell selection or re-selection condition.

It can be understood that in a case that the second measurement result is equal to the second threshold, the remote terminal can initiate the second RRC procedure with the cell that meets the cell selection or re-selection condition, or initiate the second RRC procedure with the relay terminal that meets the relay selection or re-selection condition, depending on a configuration by the network-side device, indication by the network-side device, or a predefined rule (for example, protocol agreement).

In another example, the second information includes the first threshold and the second threshold. For example, the network-side device has configured the first threshold and the second threshold. The determining, based on the first measurement information and second information, to initiate the second RRC procedure with the cell that meets the cell selection or re-selection condition or initiate the second RRC procedure with the relay terminal that meets the relay selection or re-selection condition includes one of (1) and (2).
(1) Initiating the second RRC procedure with the cell that meets the cell selection or re-selection condition in a first case, and initiating the second RRC procedure with the relay terminal that meets the relay selection or re-selection condition in a second case, where the first case includes the first measurement result being greater than the first threshold and the second measurement result being less than the second threshold, and the second case is a case other than the first case.

For example, the second case may be the first measurement result being greater than the first threshold and the second measurement result being greater than the second threshold. Alternatively, the second case may be the first measurement result being less than the first threshold and the second measurement result being less than the second threshold. Alternatively, the second case may be the first measurement result being less than the first threshold and the second measurement result being greater than the second threshold.

It can be understood that the case of the first measurement result being equal to the first threshold or the second measurement result being equal to the second threshold can be flexibly included in the first case or the second case, depending on a configuration by the network-side device, indication by the network-side device, or a predefined rule (for example, protocol agreement).

(2) Initiating the second RRC procedure to the relay terminal that meets the relay selection or re-selection condition in a third case, and initiating the second RRC procedure with the cell that meets the cell selection or re-selection condition in a fourth case, where the third case includes the first measurement result being less than the first threshold and the second measurement result being greater than the second threshold, and the fourth case is a case other than the third case.

For example, the fourth case may be the first measurement result being greater than the first threshold and the second measurement result being greater than the second threshold. Alternatively, the fourth case may be the first measurement result being less than the first threshold and the second measurement result being less than the second threshold. Alternatively, the fourth case may be the first measurement result being greater than the first threshold and the second measurement result being less than the second threshold.

It can be understood that the case of the first measurement result being equal to the first threshold or the second measurement result being equal to the second threshold can be flexibly included in the third case or the fourth case, depending on a configuration by the network-side device, indication by the network-side device, or a predefined rule (for example, protocol specification).

In order to describe in detail the measurement method provided in the embodiments of this application, the following provides descriptions with reference to several specific embodiments.

### Embodiment 1

This embodiment mainly describes an RRC connection establishment procedure (RRC establishment procedure) of the remote terminal (Remote UE). This embodiment includes the following steps.

Step 1: One of the following actions (1) and (2) may be executed in a case that the remote UE sends an RRC setup request message (RRCSetupRequest) to the network-side device (for example, base station) (the RRCSetupRequest message is received by relay UE and forwarded to the base station).
(1) Skip executing measurement and/or evaluation related to cell re-selection (cell re-selection) and execute measurement and/or evaluation related to relay re-selection (relay re-selection).
   In this example, in a case that a relay re-selection condition is met, it is determined that "RRC connection establishment failure" occurs.
(2) Execute measurement and/or evaluation related to cell re-selection and execute measurement and/or evaluation related to relay re-selection.

In this example, in a case that at least one of a cell re-selection condition and a relay re-selection condition is met, it is determined that "RRC connection establishment failure" occurs.

Step 2: In a case that the remote UE experiences "RRC connection establishment failure", the NAS layer of the remote UE is informed of the "RRC connection establishment failure" and/or the specific event that occurs in Step 1: at least one of the cell re-selection condition and the relay re-selection condition being met.

Step 3: The NAS layer triggers a remote UE AS recovery procedure, and the remote UE executes one of the following actions:
(1) Initiate an RRC connection establishment procedure with a cell (cell) that meets the cell re-selection condition.
(2) Initiate an RRC connection establishment procedure with relay UE that meets the relay re-selection condition.
(3) Execute either (1) or (2) based on a cell re-selection measurement result and/or a relay re-selection measurement result. Specifically, the results may be directly compared or indirectly compared with thresholds. The two comparison methods are described below.

### (a) Direct comparison

In a case that the cell re-selection measurement result is greater than the relay re-selection measurement result, execute (1); otherwise, execute (2).

### (b) Indirect comparison with thresholds

The base station configures a cell re-selection threshold: In a case that the cell re-selection measurement result is greater than the threshold, execute (1); otherwise, execute (2).

The base station configures a relay re-selection threshold: In a case that the relay re-selection measurement result is greater than the threshold, execute (2); otherwise, execute (1).

The base station configures a cell re-selection threshold and a relay re-selection threshold: In a case that the cell re-selection measurement result is greater than the threshold and that the relay re-selection measurement result is less than the threshold, execute (1); otherwise, execute (2). Alternatively, in a case that the cell re-selection measurement result is less than the threshold and that the relay re-selection measurement result is greater than the threshold, execute (2); otherwise, execute (1).

### Embodiment 2

This embodiment mainly describes an RRC connection resume procedure (RRC resume procedure) of the remote UE. This embodiment includes the following steps.

Step 1: One of the following actions (1) and (2) may be executed in a case that the remote UE sends an RRC resume request message (RRCResumeRequest) to the base station (the RRCResumeRequest message is to be received by relay UE and to be forwarded to the base station).
(1) Skip executing measurement and/or evaluation related to cell re-selection and execute measurement and/or evaluation related to relay re-selection.

In this example, in a case that a relay re-selection condition is met, it is determined that "RRC establishment failure" occurs.

(2) Execute measurement and/or evaluation related to cell re-selection and execute measurement and/or evaluation related to relay re-selection.

In this example, in a case that at least one of a cell re-selection condition and a relay re-selection condition is met, it is determined that "RRC connection resume failure" occurs.

Step 2: In a case that the remote UE experiences "RRC connection resume failure", the NAS layer of the remote UE is informed of the "RRC connection resume failure" and/or the specific event that occurs in Step 1: at least one of the cell re-selection condition and the relay re-selection condition being met.

Step 3: The NAS layer triggers a remote UE AS recovery procedure, and the remote UE executes one of the following actions:
(1) Initiate an RRC connection establishment procedure or an RRC connection resume procedure with a cell that meets the cell re-selection condition.

The difference between the two procedures is whether the remote UE has undergone an inactive-to-idle state transition. The state transition may be specifically performed in Step 2 or Step 3.

For example, in a case that the remote UE has undergone the inactive-to-idle state transition, this step is initiating the RRC connection establishment procedure with the cell that meets the cell re-selection condition. For another example, in a case that the remote UE has not undergone the inactive-to-idle state transition and remains in the inactive state all the time, this step is initiating the RRC connection resume procedure with the cell that meets the cell re-selection condition.

(2) Initiate an RRC connection establishment procedure or an RRC connection resume procedure with relay UE that meets the relay re-selection condition.

The difference between the two procedures is whether the remote UE has undergone an inactive-to-idle state transition. The state transition may be specifically performed in Step 2 or Step 3.

For example, in a case that the remote UE has undergone the inactive-to-idle state transition, this step is initiating the RRC connection establishment procedure with the relay UE that meets the relay re-selection condition. For another example, in a case that the remote UE has not undergone the inactive-to-idle state transition and remains in the inactive state all the time, this step is initiating the RRC connection resume procedure with the relay UE that meets the relay re-selection condition.

(3) Execute (1) or (2) based on a cell re-selection measurement result and/or a relay re-selection measurement result. Specifically, the results may be directly compared or indirectly compared with thresholds. The two comparison methods are described below.

### (a) Direct comparison

In a case that the cell re-selection measurement result is greater than the relay re-selection measurement result, execute (1); otherwise, execute (2).

### (b) Indirect comparison with thresholds

The base station configures a cell re-selection threshold: In a case that the cell re-selection measurement result is greater than the threshold, execute (1); otherwise, execute (2).

The base station configures a relay re-selection threshold: In a case that the relay re-selection measurement result is greater than the threshold, execute (2); otherwise, execute (1).

The base station configures a cell re-selection threshold and a relay re-selection threshold: In a case that the cell re-selection measurement result is greater than the threshold and that the relay re-selection measurement result is less than the threshold, execute (1); otherwise, execute (2). Alternatively, in a case that the cell re-selection measurement result is less than the threshold and that the relay re-selection measurement result is greater than the threshold, execute (2); otherwise, execute (1).

### Embodiment 3

This embodiment mainly describes an RRC connection re-establishment (RRC re-establishment) procedure of the remote UE. This embodiment includes the following steps.

Step 1: Execute one of the following actions (1) or (2) in a case that the remote UE meets an RRC re-establishment trigger condition.
(1) Skip executing measurement and/or evaluation related to cell selection (cell selection) and execute measurement and/or evaluation related to relay re-selection.
   In this example, in a case that a relay re-selection condition is met, it is determined that "RRC connection failure" occurs.
(2) Execute measurement and/or evaluation related to cell selection and execute measurement and/or evaluation related to relay re-selection.

In this example, in a case that at least one of a cell selection condition and a relay re-selection condition is met, it is determined that "RRC connection failure" occurs.

Step 2: In a case that the remote UE experiences "RRC connection failure", the NAS layer of the remote UE is informed of the "RRC connection failure" and/or the specific event that occurs in Step 1: at least one of the cell selection condition and the relay re-selection condition being met.

Step 3: The NAS layer triggers a remote UE AS recovery (AS recovery) procedure, and the remote UE executes one of the following actions:
(1) Initiate an RRC connection establishment procedure or an RRC connection re-establishment procedure with a cell that meets the cell selection condition.

The difference between the two procedures is whether the remote UE has undergone a connected (connected)-to-idle state transition. The state transition may be specifically performed in Step 2 or Step 3.

For example, in a case that the remote UE has undergone the connected-to-idle state transition, this step is initiating the RRC connection establishment procedure with the cell that meets the cell re-selection condition. For another example, in a case that the remote UE has not undergone the connected-to-idle state transition and remains in the connected state all the time, this step is initiating the RRC connection re-establishment procedure with the cell that meets the cell re-selection condition.

(2) Initiate an RRC connection establishment procedure or an RRC connection re-establishment procedure with relay UE that meets the relay re-selection condition.

The difference between the two procedures is whether the remote UE has undergone a connected-to-idle state transition. The state transition may be specifically performed in Step 2 or Step 3.

For example, in a case that the remote UE has undergone the connected-to-idle state transition, this step is initiating the RRC connection establishment procedure with the relay UE that meets the relay re-selection condition. For another example, in a case that the remote UE has not undergone the connected-to-idle state transition and remains in the connected state all the time, this step is initiating the RRC connection re-establishment procedure with the relay UE that meets the relay re-selection condition.

(3) Execute (1) or (2) based on a cell re-selection measurement result and/or a relay re-selection measurement result. Specifically, the results may be directly compared or indirectly compared with thresholds. The two comparison methods are described below.

### (a) Direct comparison

In a case that the cell re-selection measurement result is greater than the relay re-selection measurement result, execute (1); otherwise, execute (2).

### (b) Indirect comparison with thresholds

The base station configures a cell re-selection threshold: In a case that the cell re-selection measurement result is greater than the threshold, execute (1); otherwise, execute (2).

The base station configures a relay re-selection threshold: In a case that the relay re-selection measurement result is greater than the threshold, execute (2); otherwise, execute (1).

The base station configures a cell re-selection threshold and a relay re-selection threshold: In a case that the cell re-selection measurement result is greater than the threshold and that the relay re-selection measurement result is less than the threshold, execute (1); otherwise, execute (2). Alternatively, in a case that the cell re-selection measurement result is less than the threshold and that the relay re-selection measurement result is greater than the threshold, execute (2); otherwise, execute (1).

It should be noted that the measurement method provided in the embodiments of this application may be performed by a measurement apparatus, or a control module configured to perform the measurement method in the measurement apparatus. In the embodiments of this application, the measurement apparatus performing the measurement method is used to describe the measurement apparatus provided in the embodiments of this application.

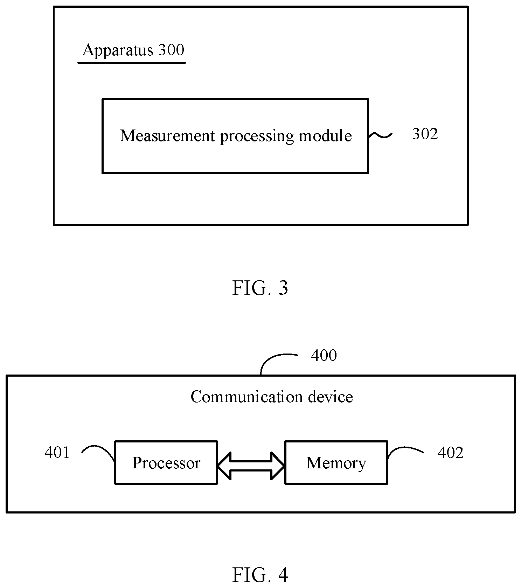

FIG. 3 is a schematic structural diagram of a measurement apparatus according to an embodiment of this application. The apparatus may correspond to a remote terminal in other embodiments. As shown in FIG. 3, the apparatus 300 includes the following module:
a measurement processing module 302 that can be configured to execute a first operation, where the first operation includes executing measurement and evaluation related to relay selection or re-selection and executing or skipping executing a first sub-operation; where the first sub-operation includes measurement and evaluation related to cell selection or re-selection.

In this embodiment of this application, the apparatus 300 can skip executing measurement and evaluation related to cell selection or re-selection but execute measurement and evaluation related to relay selection or re-selection; or execute measurement and evaluation related to cell selection or re-selection and execute measurement and evaluation related to relay selection or re-selection. This specifies the measurement behavior of the remote terminal, thereby making it easy to meet the communication requirement and improving the communication efficiency.

Optionally, in an embodiment, the first operation is executed in a first RRC procedure, and the apparatus further includes a determining module configured to determine a state of the first RRC procedure based on an execution result obtained from the first operation.

Optionally, in an embodiment, the determining module is configured to: in a case that the first operation includes executing the measurement and evaluation related to relay selection or re-selection and skipping executing the first sub-operation and that a relay selection or re-selection condition has been met, determine that failure of the first RRC procedure occurs; or in a case that the first operation includes executing the measurement and evaluation related to relay selection or re-selection and executing the first sub-operation and that at least one of the following has been met: cell selection or re-selection condition and relay selection or re-selection condition, determine that failure of the first RRC procedure occurs.

Optionally, in an embodiment, in a case of determining that failure of the first RRC procedure occurs, the apparatus further includes a notification module configured to indicate first information to a NAS layer through an RRC layer, where content of the first information includes at least one of the following: failure of the first RRC procedure; and reason for the failure of the first RRC procedure.

Optionally, in an embodiment, the apparatus further includes a resume processing module configured to indicate, through the NAS layer, the RRC layer to trigger a resume operation corresponding to the failure of the first RRC procedure, where the resume operation includes one of the following: initiating a second RRC procedure with a cell that meets the cell selection or re-selection condition; initiating a second RRC procedure with a relay terminal that meets the relay selection or re-selection condition; and determining, based on first measurement information, to initiate a second RRC procedure with a cell that meets the cell selection or re-selection condition or initiate a second RRC procedure with a relay terminal that meets the relay selection or re-selection condition, where the first measurement information includes at least one of the following: first measurement result of Uu link and second measurement result of sidelink.

Optionally, in an embodiment, the apparatus remains in an RRC state before initiating the second RRC procedure, where the second RRC procedure is the same as the first RRC procedure; or the apparatus enters an idle state before initiating the second RRC procedure, where the second RRC procedure is an RRC connection establishment procedure.

Optionally, in an embodiment, the determining, based on first measurement information, to initiate a second RRC procedure with a cell that meets the cell selection or re-selection condition or initiate a second RRC procedure with a relay terminal that meets the relay selection or re-selection condition includes: in a case that the first measurement result is greater than the second measurement result, initiating the second RRC procedure with the cell that meets the cell selection or re-selection condition; and in a case that the first measurement result is less than the second measurement result, initiating the second RRC procedure with the relay terminal that meets the relay selection or re-selection condition.

Optionally, in an embodiment, the determining, based on first measurement information, to initiate a second RRC procedure with a cell that meets the cell selection or re-selection condition or initiate a second RRC procedure with a relay terminal that meets the relay selection or re-selection condition includes: determining, based on the first measurement information and second information, to initiate the second RRC procedure with the cell that meets the cell selection or re-selection condition or initiate the second RRC procedure with the relay terminal that meets the relay selection or re-selection condition; where the second information includes at least one of the following: first threshold related to Uu link and second threshold related to sidelink.

Optionally, in an embodiment, the second information includes the first threshold, and the determining, based on the first measurement information and second information, to initiate the second RRC procedure with the cell that meets the cell selection or re-selection condition or initiate the second RRC procedure with the relay terminal that meets the relay selection or re-selection condition includes at least one of the following: in a case that the first measurement result is greater than the first threshold, initiating the second RRC procedure with the cell that meets the cell selection or re-selection condition; and in a case that the first measurement result is less than the first threshold, initiating the second RRC procedure with the relay terminal that meets the relay selection or re-selection condition.

Optionally, in an embodiment, the second information includes the second threshold, and the determining, based on the first measurement information and second information, to initiate the second RRC procedure with the cell that meets the cell selection or re-selection condition or initiate the second RRC procedure with the relay terminal that meets the relay selection or re-selection condition includes at least one of the following: in a case that the second measurement result is greater than the second threshold, initiating the second RRC procedure with the relay terminal that meets the relay selection or re-selection condition; and in a case that the second measurement result is less than the second threshold, initiating the second RRC procedure with the cell that meets the cell selection or re-selection condition.

Optionally, in an embodiment, the second information includes the first threshold and the second threshold, and the determining, based on the first measurement information and second information, to initiate the second RRC procedure with the cell that meets the cell selection or re-selection condition or initiate the second RRC procedure with the relay terminal that meets the relay selection or re-selection condition includes one of the following: initiating the second RRC procedure with the cell that meets the cell selection or re-selection condition in a first case, and initiating the second RRC procedure with the relay terminal that meets the relay selection or re-selection condition in a second case, where the first case includes the first measurement result being greater than the first threshold and the second measurement result being less than the second threshold, and the second case is a case other than the first case; and initiating the second RRC procedure with the relay terminal that meets the relay selection or re-selection condition in a third case, and initiating the second RRC procedure with the cell that meets the cell selection or re-selection condition in a fourth case, where the third case includes the first measurement result being less than the first threshold and the second measurement result being greater than the second threshold, and the fourth case is a case other than the third case.

Optionally, in an embodiment, the first RRC procedure includes one of the following procedures: RRC connection establishment procedure; RRC connection resume procedure; and RRC connection re-establishment procedure.

For the apparatus 300 according to this embodiment of this application, reference may be made to the processes of the method 200 in the corresponding embodiment of this application, and the units/modules of the apparatus 300 and other operations and/or functions described above are respectively intended to implement the corresponding processes in the method 200, with the same or equivalent technical effects achieved. For brevity, details are not described herein again.

The measurement apparatus in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

The measurement apparatus in this embodiment of this application may be an apparatus having an operating system. The operating system may be an android (Android) operating system, may be an iOS operating system, or may be another possible operating system. This is not specifically limited in the embodiments of this application.

The measurement apparatus provided in this embodiment of this application can implement the processes of the method embodiment in FIG. 2, with the same technical effects achieved. To avoid repetition, details are not described herein again.

Optionally, as shown in FIG. 4, an embodiment of this application further provides a communication device 400 including a processor 401, a memory 402, and a program or instructions stored in the memory 402 and capable of running on the processor 401. For example, in a case that the communication device 400 is a terminal, the program or instructions are executed by the processor 401 to implement the processes of the foregoing embodiments of the measurement method, with the same technical effects achieved. To avoid repetition, details are not described herein again.

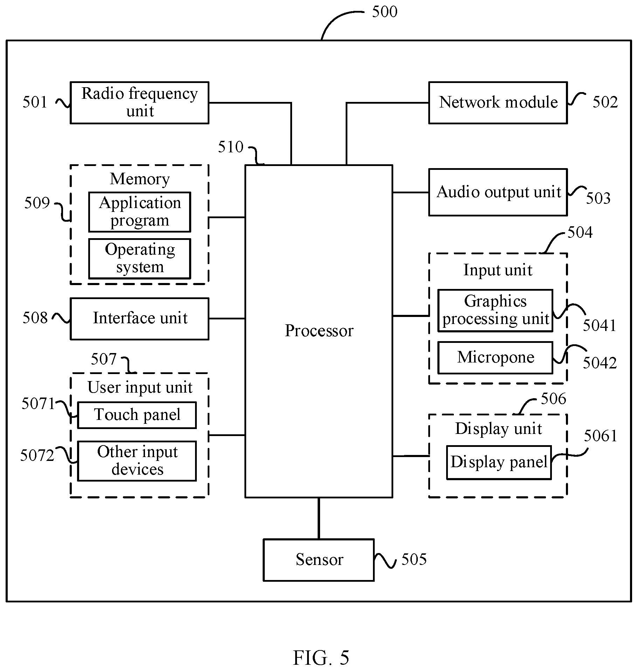

An embodiment of this application further provides a terminal including a processor and a communication interface. The processor is configured to execute a first operation, where the first operation includes executing measurement and evaluation related to relay selection or re-selection and executing or skipping executing a first sub-operation; where the first sub-operation includes measurement and evaluation related to cell selection or re-selection. It should be noted that the terminal embodiment is corresponding to the method embodiment on the remote terminal side. All implementation processes and implementations of the foregoing method embodiment are applicable to the terminal embodiment, with the same technical effects achieved. Specifically, FIG. 5 is a schematic diagram of a hardware structure of a terminal implementing an embodiment of this application.

The terminal 500 includes but is not limited to at least some components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, battery) for supplying power to the components. The power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or combine some of the components, or arrange the components differently. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in an image capture mode or a video capture mode. The display unit 506 may include a display panel 5061, and the display panel 5061 may be configured in a form of a liquid crystal display, an organic light-emitting diode, or the like. The user input unit 507 includes a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a functional button (such as a volume control button or a power on/off button), a trackball, a mouse, and a joystick. Details are not described herein.

In this embodiment of this application, the radio frequency unit 501 sends downlink data received from a network-side device to the processor 510 for processing, and in addition, sends uplink data to the network-side device. Generally, the radio frequency unit 501 includes but is not limited to an antenna, at least one amplifier, a transceiver, a coupler, a low noise amplifier, and a duplexer.

The memory 509 may be configured to store software programs or instructions and various data. The memory 509 may mainly include a program or instruction storage area and a data storage area. The program or instruction storage area may store an operating system, an application program or instruction required by at least one function (for example, a sound play function and an image play function), and the like. In addition, the memory 509 may include a high-speed random access memory, and may also include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 510 may include one or more processing units. Optionally, the processor 510 may integrate an application processor and a modem processor. The application processor mainly processes an operating system, a user interface, an application program or instruction, or the like. The modem processor mainly processes wireless communication, for example, a baseband processor. It can be understood that the modem processor may alternatively be not integrated into the processor 510.

The processor 510 can be configured to execute a first operation, where the first operation includes executing measurement and evaluation related to relay selection or re-selection and executing or skipping executing a first sub-operation; where the first sub-operation includes measurement and evaluation related to cell selection or re-selection.

In this embodiment of this application, the terminal can skip executing measurement and evaluation related to cell selection or re-selection but execute measurement and evaluation related to relay selection or re-selection; or execute measurement and evaluation related to cell selection or re-selection and execute measurement and evaluation related to relay selection or re-selection. This specifies the measurement behavior of the remote terminal, thereby making it easy to meet the communication requirement and improving the communication efficiency.

The terminal 500 provided in this embodiment of this application can further implement the processes of the foregoing embodiments of the measurement method, with the same technical effects achieved. To avoid repetition, details are not described herein again.

An embodiment of this application further provides a readable storage medium. The readable storage medium stores a program or instructions. When the program or instructions are executed by a processor, the processes of the foregoing embodiment of the measurement method are implemented, with the same technical effects achieved. To avoid repetition, details are not described herein again.

The processor may be a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

Another embodiment of this application further provides a chip. The chip includes a processor and a communication interface, the communication interface is coupled to the processor, and the processor is configured to run a program or instructions to implement the processes of the foregoing embodiments of the measurement method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. In absence of more constraints, an element preceded by "includes a... " does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

## Claims

1. A measurement method comprising:
executing, by a remote terminal, a first operation, wherein the first operation comprises executing measurement and evaluation related to relay selection or re-selection and executing or skipping executing a first sub-operation; wherein
the first sub-operation comprises measurement and evaluation related to cell selection or re-selection.

2. The method according to claim 1, wherein the first operation is executed in a first radio resource control RRC procedure, and the method further comprises:
determining a state of the first RRC procedure based on an execution result obtained from the first operation.

3. The method according to claim 2, wherein the determining a state of the first RRC procedure based on an execution result obtained from the first operation comprises:
in a case that the first operation comprises executing the measurement and evaluation related to relay selection or re-selection and skipping executing the first sub-operation and that a relay selection or re-selection condition has been met, determining that failure of the first RRC procedure occurs; or
in a case that the first operation comprises executing the measurement and evaluation related to relay selection or re-selection and executing the first sub-operation and that at least one of the following has been met: cell selection or re-selection condition and relay selection or re-selection condition, determining that failure of the first RRC procedure occurs.

4. The method according to claim 3, wherein in a case of determining that failure of the first RRC procedure occurs, the method further comprises: indicating, by an RRC layer of the remote terminal, first information to a non-access stratum NAS layer, wherein content of the first information comprises at least one of the following:
failure of the first RRC procedure; and
reason for the failure of the first RRC procedure.

5. The method according to claim 4, wherein the method further comprises: indicating, by the NAS layer, the RRC layer to trigger a resume operation corresponding to the failure of the first RRC procedure, wherein the resume operation comprises one of the following:
initiating a second RRC procedure with a cell that meets the cell selection or re-selection condition;
initiating a second RRC procedure with a relay terminal that meets the relay selection or re-selection condition; and
determining, based on first measurement information, to initiate a second RRC procedure with a cell that meets the cell selection or re-selection condition or initiate a second RRC procedure with a relay terminal that meets the relay selection or re-selection condition, wherein the first measurement information comprises at least one of the following: first measurement result of Uu link and second measurement result of sidelink.

6. The method according to claim 5, wherein
remaining, by the remote terminal, in an RRC state before initiating the second RRC procedure, wherein the second RRC procedure is the same as the first RRC procedure; or
entering, by the remote terminal, an idle state before initiating the second RRC procedure, wherein the second RRC procedure is an RRC connection establishment procedure.

7. The method according to claim 5, wherein the determining, based on first measurement information, to initiate a second RRC procedure with a cell that meets the cell selection or re-selection condition or initiate a second RRC procedure with a relay terminal that meets the relay selection or re-selection condition comprises:
in a case that the first measurement result is greater than the second measurement result, initiating the second RRC procedure with the cell that meets the cell selection or re-selection condition; and
in a case that the first measurement result is less than the second measurement result, initiating the second RRC procedure with the relay terminal that meets the relay selection or re-selection condition.

8. The method according to claim 5, wherein the determining, based on first measurement information, to initiate a second RRC procedure with a cell that meets the cell selection or re-selection condition or initiate a second RRC procedure with a relay terminal that meets the relay selection or re-selection condition comprises:
determining, based on the first measurement information and second information, to initiate the second RRC procedure with the cell that meets the cell selection or re-selection condition or initiate the second RRC procedure with the relay terminal that meets the relay selection or re-selection condition; wherein
the second information comprises at least one of the following: first threshold related to Uu link and second threshold related to sidelink.

9. The method according to claim 8, wherein the second information comprises the first threshold, and the determining, based on the first measurement information and second information, to initiate the second RRC procedure with the cell that meets the cell selection or re-selection condition or initiate the second RRC procedure with the relay terminal that meets the relay selection or re-selection condition comprises at least one of the following:
in a case that the first measurement result is greater than the first threshold, initiating the second RRC procedure with the cell that meets the cell selection or re-selection condition; and
in a case that the first measurement result is less than the first threshold, initiating the second RRC procedure with the relay terminal that meets the relay selection or re-selection condition.

10. The method according to claim 8, wherein the second information comprises the second threshold, and the determining, based on the first measurement information and second information, to initiate the second RRC procedure with the cell that meets the cell selection or re-selection condition or initiate the second RRC procedure with the relay terminal that meets the relay selection or re-selection condition comprises at least one of the following:
in a case that the second measurement result is greater than the second threshold, initiating the second RRC procedure with the relay terminal that meets the relay selection or re-selection condition; and
in a case that the second measurement result is less than the second threshold, initiating the second RRC procedure with the cell that meets the cell selection or re-selection condition.

11. The method according to claim 8, wherein the second information comprises the first threshold and the second threshold, and the determining, based on the first measurement information and second information, to initiate the second RRC procedure with the cell that meets the cell selection or re-selection condition or initiate the second RRC procedure with the relay terminal that meets the relay selection or re-selection condition comprises one of the following:
initiating the second RRC procedure with the cell that meets the cell selection or re-selection condition in a first case, and initiating the second RRC procedure with the relay terminal that meets the relay selection or re-selection condition in a second case, wherein the first case comprises the first measurement result being greater than the first threshold and the second measurement result being less than the second threshold, and the second case is a case other than the first case; and
initiating the second RRC procedure with the relay terminal that meets the relay selection or re-selection condition in a third case, and initiating the second RRC procedure with the cell that meets the cell selection or re-selection condition in a fourth case, wherein the third case comprises the first measurement result being less than the first threshold and the second measurement result being greater than the second threshold, and the fourth case is a case other than the third case.

12. The method according to claim 2, wherein the first RRC procedure comprises one of the following procedures:
RRC connection establishment procedure;
RRC connection resume procedure; and
RRC connection re-establishment procedure.

13. A measurement apparatus comprising:
a measurement processing module, configured to execute a first operation, wherein the first operation comprises executing measurement and evaluation related to relay selection or re-selection and executing or skipping executing a first sub-operation; wherein
the first sub-operation comprises measurement and evaluation related to cell selection or re-selection.

14. The apparatus according to claim 13, wherein the first operation is executed in a first RRC procedure, and the apparatus further comprises a determining module configured to:
determine a state of the first RRC procedure based on an execution result obtained from the first operation.

15. The apparatus according to claim 14, wherein the determining module is configured to:
in a case that the first operation comprises executing the measurement and evaluation related to relay selection or re-selection and skipping executing the first sub-operation and that a relay selection or re-selection condition has been met, determine that failure of the first RRC procedure occurs; or
in a case that the first operation comprises executing the measurement and evaluation related to relay selection or re-selection and executing the first sub-operation and that at least one of the following has been met: cell selection or re-selection condition and relay selection or re-selection condition, determine that failure of the first RRC procedure occurs.

16. The apparatus according to claim 15, wherein in a case of determining that failure of the first RRC procedure occurs, the apparatus further comprises a notification module configured to indicate first information to a NAS layer through an RRC layer, wherein content of the first information comprises at least one of the following:
failure of the first RRC procedure; and
reason for the failure of the first RRC procedure.

17. The apparatus according to claim 16, wherein the apparatus further comprises a resume processing module configured to indicate, through the NAS layer, the RRC layer to trigger a resume operation corresponding to the failure of the first RRC procedure, wherein the resume operation comprises one of the following:
initiating a second RRC procedure with a cell that meets the cell selection or re-selection condition;
initiating a second RRC procedure with a relay terminal that meets the relay selection or re-selection condition; and
determining, based on first measurement information, to initiate a second RRC procedure with a cell that meets the cell selection or re-selection condition or initiate a second RRC procedure with a relay terminal that meets the relay selection or re-selection condition, wherein the first measurement information comprises at least one of the following: first measurement result of Uu link and second measurement result of sidelink.

18. The apparatus according to claim 17, wherein
the apparatus remains in an RRC state before initiating the second RRC procedure, wherein the second RRC procedure is the same as the first RRC procedure; or
the apparatus enters an idle state before initiating the second RRC procedure, wherein the second RRC procedure is an RRC connection establishment procedure.

19. The apparatus according to claim 17, wherein the determining, based on first measurement information, to initiate a second RRC procedure with a cell that meets the cell selection or re-selection condition or initiate a second RRC procedure with a relay terminal that meets the relay selection or re-selection condition comprises:
in a case that the first measurement result is greater than the second measurement result, initiating the second RRC procedure with the cell that meets the cell selection or re-selection condition; and
in a case that the first measurement result is less than the second measurement result, initiating the second RRC procedure with the relay terminal that meets the relay selection or re-selection condition.

20. The apparatus according to claim 17, wherein the determining, based on first measurement information, to initiate a second RRC procedure with a cell that meets the cell selection or re-selection condition or initiate a second RRC procedure with a relay terminal that meets the relay selection or re-selection condition comprises:
determining, based on the first measurement information and second information, to initiate the second RRC procedure with the cell that meets the cell selection or re-selection condition or initiate the second RRC procedure with the relay terminal that meets the relay selection or re-selection condition; wherein
the second information comprises at least one of the following: first threshold related to Uu link and second threshold related to sidelink.

21. The apparatus according to claim 20, wherein the second information comprises the first threshold, and the determining, based on the first measurement information and second information, to initiate the second RRC procedure with the cell that meets the cell selection or re-selection condition or initiate the second RRC procedure with the relay terminal that meets the relay selection or re-selection condition comprises at least one of the following:
in a case that the first measurement result is greater than the first threshold, initiating the second RRC procedure with the cell that meets the cell selection or re-selection condition; and
in a case that the first measurement result is less than the first threshold, initiating the second RRC procedure with the relay terminal that meets the relay selection or re-selection condition.

22. The apparatus according to claim 20, wherein the second information comprises the second threshold, and the determining, based on the first measurement information and second information, to initiate the second RRC procedure with the cell that meets the cell selection or re-selection condition or initiate the second RRC procedure with the relay terminal that meets the relay selection or re-selection condition comprises at least one of the following:
in a case that the second measurement result is greater than the second threshold, initiating the second RRC procedure with the relay terminal that meets the relay selection or re-selection condition; and
in a case that the second measurement result is less than the second threshold, initiating the second RRC procedure with the cell that meets the cell selection or re-selection condition.

23. The apparatus according to claim 20, wherein the second information comprises the first threshold and the second threshold, and the determining, based on the first measurement information and second information, to initiate the second RRC procedure with the cell that meets the cell selection or re-selection condition or initiate the second RRC procedure with the relay terminal that meets the relay selection or re-selection condition comprises one of the following:
initiating the second RRC procedure with the cell that meets the cell selection or re-selection condition in a first case, and initiating the second RRC procedure with the relay terminal that meets the relay selection or re-selection condition in a second case, wherein the first case comprises the first measurement result being greater than the first threshold and the second measurement result being less than the second threshold, and the second case is a case other than the first case; and
initiating the second RRC procedure with the relay terminal that meets the relay selection or re-selection condition in a third case, and initiating the second RRC procedure with the cell that meets the cell selection or re-selection condition in a fourth case, wherein the third case comprises the first measurement result being less than the first threshold and the second measurement result being greater than the second threshold, and the fourth case is a case other than the third case.

24. The apparatus according to claim 14, wherein the first RRC procedure comprises one of the following procedures:
RRC connection establishment procedure;
RRC connection resume procedure; and
RRC connection re-establishment procedure.

25. A terminal comprising a processor, a memory, and a program or instructions stored in the memory and capable of running on the processor, wherein when the program or instructions are executed by the processor, the measurement method according to any one of claims 1 to 12 is implemented.

26. A readable storage medium, wherein the readable storage medium stores a program or instructions, and when the program or instructions are executed by a processor, the measurement method according to any one of claims 1 to 12 is implemented.

27. A chip, wherein the chip comprises a processor and a communication interface, the communication interface is coupled to the processor, and the processor is configured to run a program or instructions to implement the measurement method according to any one of claims 1 to 12.

28. A computer program, wherein the computer program is stored in a non-transient storage medium, and the program is executed by at least one processor to implement the measurement method according to any one of claims 1 to 12.
